# EUROPÄISCHE PATENTSCHRIFT

(11) **EP 1 614 046 B1**
(45) Veröffentlichungstag und Bekanntmachung des Hinweises auf die Patenterteilung: **21.03.2007**
(21) Anmeldenummer: 03782325.9
(22) Anmeldetag: 06.12.2003
(51) Int. Cl.: G06F 12/14, G06F 1/00

(54) **FREIGABE VON FUNKTIONEN EINES GERÄTES DER UNTERHALTUNGSELEKTRONIK UNTER VERWENDUNG EINES FREISCHALTCODES**
RELEASE OF FUNCTIONS OF AN ENTERTAINMENT ELECTRONICS APPLIANCE USING A RELEASE CODE
LIBERATION DE FONCTIONS D'UN APPAREIL ELECTRONIQUE DE DIVERTISSEMENT A L'AIDE D'UN CODE DE MISE EN FONCTIONNEMENT

(30) Priorität: 23.12.2002 DE 10260884
(43) Veröffentlichungstag der Anmeldung: 11.01.2006
(73) Patentinhaber: Grundig Multimedia B.V., 1083HJ Amsterdam (NL)
(72) Erfinder: HEIDER, Peter, 91522 Ansbach (DE); MENGER, Karl-Heinz, 90562 Heroldsberg (DE); GÜRTLER, Thomas, 90522 Oberasbach (DE)
(74) Vertreter: Pröll, Jürgen
(86) Internationale Anmeldenummer: PCT/EP2003/013846
(87) Internationale Veröffentlichungsnummer: WO 2004/059492

(56) Entgegenhaltungen:
- EP-A- 1 248 190
- DE-A- 4 321 765
- DE-A- 10 000 964
- DE-A- 10 045 673
- DE-A- 19 824 814

## Beschreibung

Die vorliegende Erfindung betrifft ein Gerät der Unterhaltungselektronik und ein Verfahren für den Betrieb des Geräts der Unterhaltungselektronik.

Es sind Geräte der Unterhaltungselektronik sowie Verfahren für deren Betrieb bekannt geworden, die es ermöglichen, die Geräte der Unterhaltungselektronik flexibel hinsichtlich ihrer Funktionalität zu betreiben.

Aus der DE 41 29 067 A1 der Anmelderin ist es beispielsweise bekannt, statt einer Vielzahl verschiedener Typen von Geräten der Unterhaltungselektronik, die sich hinsichtlich ihrer funktionellen Ausstattung unterscheiden, nur einen Typ für das jeweilige Gerät der Unterhaltungselektronik herzustellen und aus der Gesamtheit der verfügbaren Gerätefunktionen nur die Gerätefunktionen mittels einer Chipkarte zu aktivieren und für den Betrieb freizugeben, die für den jeweiligen Käufer des Geräts von Interesse sind und für die er bereit ist, eine Gebühr zu entrichten.

Dadurch sind entsprechende Geräte der Unterhaltungselektronik und deren Betrieb sehr flexibel, da mittels der Chipkarte bestimmte Gerätefunktionen, die bereits mittels der in den Geräten der Unterhaltungselektronik vorhandenen Schaltkreise realisiert sind, jederzeit freigegeben werden können, um den Funktionsumfang der Geräte der Unterhaltungselektronik zu erweitern. Durch die Verwendung einer eindeutig identifizierbaren Nummer für die Chipkarten und/oder einer eindeutig identifizierbaren Nummer für die Geräte der Unterhaltungselektronik kann sichergestellt werden, daß die jeweilige Chipkarte nur für ein Gerät der Unterhaltungselektronik verwendet werden kann, so daß ein mißbräuchlicher Einsatz der Chipkarten verhindert wird. Somit kann eine Chipkarte nicht dazu verwendet werden, die auf ihr für die Freigabe gespeicherten Gerätefunktionen auf mehr als einem Gerät der Unterhaltungselektronik für den Betrieb freizugeben.

Für die bekannten Geräte der Unterhaltungselektronik, die über Schaltkreise verfügen, welche die Gerätefunktionen realisieren, ist die Freigabe mittels der beschriebenen Chipkarte vorteilhaft, da ein besonderer Schutz vorgesehen werden muß, um die in den bekannten Geräten der Unterhaltungselektronik vorhandenen Schaltkreise vor unberechtigter Benutzung zu schützen, d. h. die unberechtigte Freigabe der in den Schaltkreisen realisierten Gerätefunktionen zu verhindern.

Mittlerweile hat sich jedoch gezeigt, daß neben den bekannten Geräten der Unterhaltungselektronik, bei denen sämtliche Funktionen mittels bestimmter Schaltkreise realisiert werden, immer mehr Geräte der Unterhaltungselektronik zum Einsatz kommen, bei denen eine Vielzahl der Funktionen mittels universeller Schaltkreise, z. B. Mikroprozessoren, realisiert werden. Die Freigabe bestimmter Funktionen der Schaltkreise der Geräte der Unterhaltungselektronik allein ist in diesem Fall kein geeignetes Mittel für die Freigabe bestimmter Gerätefunktionen, da in der Regel die volle Funktionalität der Schaltkreise, z. B. Mikroprozessoren, für die Erzeugung jeder der Gerätefunktionen benötigt wird.

Aus EP-A 1 248 190 ist bekannt, eine Software oder Teile davon zu aktivieren oder zu deaktivieren. Es ist im Weiteren zu entnehmen, dass ein Schlüssel vorhanden ist, welcher es ermöglicht, einzelne Teile der im Gerät vorhandenen Software zu aktivieren oder zu deaktivieren. Dieser Softwareschlüssel ist abhängig von einem Zeichen, welches in der Software selbst oder im Gerät vorhanden ist. Dieser Softwareschlüssel zur Verendung ist jedoch auf diese Software spezifiziert und kann aber auch nur für einen einzelnen spezifischen Freigabeprozess verwendet werden.

Aus DE 43 21 765 A ist ein Verfahren zum freigeben einer funktionalen Option für Käufer von computerartigen Systemen offenbart. Das Freigabesystem nicht im Gerät selbst implementiert, sondern wird dieses anhand von vorab zu gewinnenden Codes des Gerätes vorgegeben.

Aus DE 100 45 673 A ist ein Verfahren zum Betreiben einer Vorrichtung und eine Vorrichtung mit einem individuellen Code bekannt. Hierbei wird ein im Gerät vorhandener Code über einen Gegencode aktiviert um eine begrenzte Nutzbarkeit zu erweitem.

Aus DE 198 24 814 A ist eine programmgesteuerte Vorrichtung offenbart. Diese programmgesteuerte Vorrichtung ist insbesondere eine Telekommunikationsanlage, wobei ein Speicherchip zum Einsatz kommt, indem bei Auslieferung der Vorrichtung individuelle Benutzerdaten programmiert werden, die dem für den jeweiligen Nutzer zur Verfügung stehenden Umfang der Nutzung der Software der programmgesteuerten Vorrichtung definieren.

Der Speicherchip ist test implementiert. Die Software ist nicht abänderbar.

Aus DE 100 00 964 A ist ein Verfahren zur Verschlüsselung von Software, ein Verfahren zur Übermittlung von Software, ein Verfahren zur Entschlüsselung von Software und ein softwaregesteuertes Gerät offenbart. Dieses Verfahren beschreibt die Möglichkeit einer Update-Funktion und einer Veränderung der Software, welche im Gerät vorhanden ist. Eine Freischaltung in Form einer Erweiterung ist nicht angedacht.

Ebenso hat es sich gezeigt, daß eine Weiterentwicklung der Gerätefunktionen und/oder eine Beseitigung von Fehlern oder Störungen der Gerätefunktionen, die erst während des Betriebs der Geräte der Unterhaltungselektronik erkannten werden oder auftreten, nur mit großem Aufwand möglich sind, weil dafür in der Regel ein Eingriff in die bzw. der Austausch der Schaltkreise der bekannten Geräte der Unterhaltungselektronik nötig ist.

Es ist daher Aufgabe der vorliegenden Erfindung, ein Gerät der Unterhaltungselektronik und ein Verfahren für den Betrieb des Geräts der

Unterhaltungselektronik anzugeben, welche die individuelle Freigabe von Gerätefunktionen und/oder die nachträgliche Beseitigung von Fehlern oder Störungen des Geräts der Unterhaltungselektronik ermöglichen.

Bei der vorliegenden Erfindung wird diese Aufgabe durch die Merkmale der Ansprüche 1 und 11 gelöst.

Bei der Erfindung wird dabei von der Überlegung ausgegangen, daß bei dem Betrieb eines Geräts der Unterhaltungselektronik, mittels Software für die Steuerung des Geräts der Unterhaltungselektronik und die Ausführung von Gerätefunktionen, ein kryptografischer Algorithmus verwendet wird, welcher eine Kennzahl, die das Gerät der Unterhaltungselektronik eindeutig kennzeichnet, mit einem Code für die Freischaltung der Software oder von Teilen der Software überprüft, und der Algorithmus bei erfolgreicher Überprüfung den Betrieb der Teile der Software freigibt, deren Freigabe im Code für die Freischaltung enthalten ist.

Der Vorteil der Erfindung ist darin zu sehen, daß das Gerät der Unterhaltungselektronik jederzeit individuell hinsichtlich der zur Verfügung stehenden Gerätefunktionen bzw. Teilen der Software konfiguriert werden kann. Durch die Verwendung des Codes für die Freischaltung, die eindeutig jeweils einem Gerät der Unterhaltungselektronik zugeordnet ist, ist es zudem nicht erforderlich, daß die für den Betrieb des Geräts der Unterhaltungselektronik verwendete Software verschlüsselt wird, da diese nur dann ausgeführt werden kann, wenn eine entsprechende Freigabe vorliegt. Dadurch kann die Software jederzeit im Gerät der Unterhaltungselektronik gespeichert sein. Ebenso kann das Gerät der Unterhaltungselektronik jederzeit mit Software erweitert werden, indem die Software geladen und gespeichert wird, da die Ausführbarkeit der Software von einem entsprechende Code für die Freischaltung abhängt.

In einer bevorzugten Ausführungsform wird der Algorithmus für die Überprüfung von Kennzahl und Code für die Freischaltung jedesmal ausgeführt, wenn das Gerät der Unterhaltungselektronik in Betrieb genommen wird.

Dadurch kann ein besonders guter Schutz erreicht werden, da im Gerät nicht dauerhaft in erkennbarer Form gespeichert wird, welche der Gerätefunktionen bzw. Teile der Software für den Betrieb freigegeben sind, so daß Manipulationen vermieden werden können.

In einer weiteren bevorzugten Ausführungsform wird das aktuelle Datum bei der erstmaligen Inbetriebnahme des Geräts der Unterhaltungselektronik oder nach einer gewissen Anzahl von Betriebsstunden ermittelt und gespeichert.

Damit wird es möglich, das Alter des Geräts der Unterhaltungselektronik bzw. den Zeitpunkt des Verkaufs des Geräts der Unterhaltungselektronik zu bestimmen, um feststellen zu können, ob eventuell erforderliche Servicearbeiten innerhalb eines Garantiezeitraums durchgeführt wurden.

Weitere Vorteile der vorliegenden Erfindung ergeben sich aus den abhängigen Ansprüchen sowie der nachfolgenden Beschreibung eines Verfahrens für den Betrieb eines Ausführungsbeispiels eines Geräts der Unterhaltungselektronik anhand von Figuren.

Es zeigt:
- Figur 1: ein Prinzipschaltbild eines Geräts der Unterhaltungselektronik,
- Figur 2: eine Freigabe von bestimmten Gerätefunktionen, bei einem Gerät der Unterhaltungselektronik, und
- Figur 3: eine exemplarische Auflistung von Software für den Betrieb eines Geräts der Unterhaltungselektronik.

Zur Erleichterung des Verständnisses der vorliegenden Erfindung sind in den Figuren nur die Bestandteile dargestellt, die im Zusammenhang mit der Erfindung von Bedeutung sind.

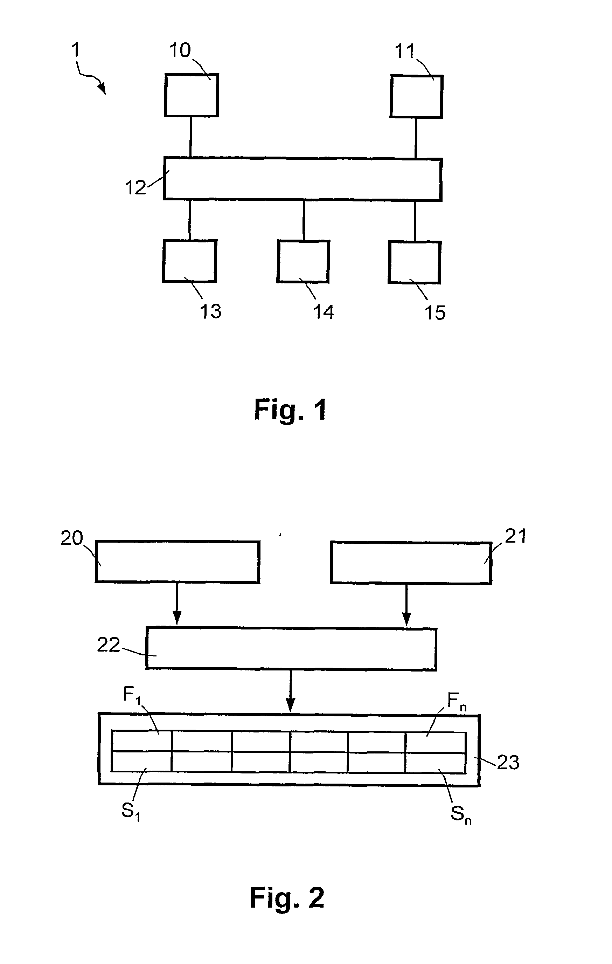

Figur 1 zeigt ein Prinzipschaltbild eines Geräts der Unterhaltungselektronik 1, mit einer Steuereinrichtung 12, beispielsweise einem Mikroprozessor, an den ein nichtflüchtiger Speicher 13, beispielsweise ein EEPROM-Speicher, ein flüchtiger Speicher 14, beispielsweise eine RAM-Speicher, eine Bedieneinrichtung 15, die beispielsweise von einem Fernbedienungsempfänger mit zugehörigem Fernbedienungsgeber gebildet werden kann, sowie eine das Gerät der Unterhaltungselektronik 1 bildende Einrichtung 10, die je nach Art des Geräts der Unterhaltungselektronik 1 von einer Vielzahl von Hardwarekomponenten gebildet wird, angeschlossen sind. Ist das Gerät der Unterhaltungselektronik 1 beispielsweise ein Fernsehgerät, werden die Einrichtung 10, bzw. die Hardwarekomponenten, unter anderem von einem Empfänger oder Tuner, einer Zwischenfrequenzstufe, einer Bildsignalschaltung, einer Tonsignalschaltung, einer Anzeige, z. B. einer Bildröhre, und einem oder mehreren Lautsprechern gebildet. Die Einrichtung 10, bzw. die sie bildenden Hardwarekomponenten, werden von der Steuereinrichtung 12 gesteuert, wozu die Steuereinrichtung 12 Software verwendet, die im nichtflüchtigen Speicher 13 gespeichert ist. Während des Betriebs wird die jeweils benötigte Software zur Ausführung in den flüchtigen Speicher 14 geladen, der als Arbeitsspeicher dient. Ein Benutzer kann das Gerät der Unterhaltungselektronik 1 mittels der Bedieneinrichtung 15 bedienen, z. B. um es in Betrieb zu nehmen, bestimmte Sender oder Programme auszuwählen usw.

Für den Betrieb des Geräts der Unterhaltungselektronik 1 werden verschiedene Arten von Software verwendet. Als elementarer Bestandteil wird eine sogenannte Firmware verwendet, welche von der Steuereinrichtung 12 ausgeführt wird, sobald das Gerät der Unterhaltungselektronik 1 mittels der Bedieneinrichtung 15 eingeschaltet wird. Die Firmware ist dazu in einem besonderen Bereich des nichtflüchtigen Speichers 13 abgelegt. Es kann auch vorgesehen sein, daß die Firmware in einem separaten, nichtflüchtigen Speicher gespeichert ist. Durch die Ausführung der Firmware wird weitere Software durch die Steuereinrichtung 12 von dem nichtflüchtigen Speicher 13 in den flüchtigen Speicher 14 zur Ausführung geladen. Dabei kann beispielsweise eine Dekomprimierung erfolgen, falls die Software in komprimierter Form im nichtflüchtigen Speicher 13 gespeichert ist.

Bei der weiteren Software handelt es sich um ein Betriebssystem, welches für den Betrieb der Steuereinrichtung benötigt wird, sowie die grundlegenden Funktionen des Geräts der Unterhaltungselektronik 1 steuert.

Als weitere Art der Software werden Softwarebestandteile zur Ausführung geladen, die der Steuerung einzelner Hardwarekomponenten dienen, beispielsweise kann eine Software für den Betrieb des Tuners vorgesehen sein, eine weitere Software für den Betrieb der Bildröhre usw.

Schließlich werden Softwarebestandteile zur Ausführung geladen, die dazu dienen bestimmte Gerätefunktionen durchzuführen. Handelt es sich bei dem Gerät der Unterhaltungselektronik 1 - wie oben beispielhaft angegeben - um ein Fernsehgerät, kann dies beispielsweise eine elektronische Programmzeitschrift (Electronic Program Guide, EPG) sein. Der EPG wird aus Daten gebildet, die im empfangenen Fernsehsignal enthalten sind. Diese Daten werden unter Steuerung der Steuereinheit 12 von den Hardwarekomponenten 10 des Fernsehgeräts 1 aus dem Fernsehsignal abgetrennt, als Bildsignal aufbereitet und auf der Anzeige des Fernsehgeräts 1 dargestellt. Aus den dargestellten Daten über das aktuelle und zukünftige Programm kann dann eine Auswahl getroffen werden.

Um eine individuelle Freigabe von Gerätefunktionen bei dem Gerät der Unterhaltungselektronik 1 zu ermöglichen, ist es vorgesehen, daß die Software und/oder Bestandteile der Software nur dann von der Steuereinrichtung 12 ausgeführt werden können, wenn diese für die Ausführung freigegeben ist und/oder sind. Dies erlaubt die individuelle Konfiguration des Geräts der Unterhaltungselektronik 1 nach den Wünschen eines Käufers und gestattet auch eine individuelle Preisgestaltung, die sich an den zur Verfügung stehenden Gerätefunktionen des Geräts der Unterhaltungselektronik 1 bemißt.

In Figur 2 ist eine Freigabe von verfügbaren Gerätefunktionen F₁ bis Fₙ bei dem Gerät der Unterhaltungselektronik 1 dargestellt. Eine der Gerätefunktionen F₁ kann beispielsweise die oben beschriebene elektronische Programmzeitschrift sein. Ebenso kann es vorgesehen sein, daß Funktionen bzw. Bestandteile der Software freigegeben werden, die über die Steuereinrichtung 12 Hardwarebestandteile bzw. deren Funktionen steuern.

Die Freigabe der Gerätefunktionen F₁ bis Fₙ erfolgt mittels eines Algorithmus 22, der von der Steuereinrichtung 12 ausgeführt wird, wobei Daten 20 des Geräts der Unterhaltungselektronik 1 sowie ein Code für die Freischaltung 21 verarbeitet werden. Bei dem Algorithmus 22 handelt es sich um einen kryptografischen Algorithmus, der beispielsweise in dem besonderen Bereich des nichtflüchtigen Speichers 13 gespeichert ist, der vor unberechtigten Zugriffen geschützt ist, d. h. die in dem besonderen Bereich des nichtflüchtigen Speichers 13 gespeicherten Daten können ohne entsprechende Berechtigung nicht gelesen, verändert oder gelöscht werden. Bevorzugt werden in dem besonderen Bereich des nichtflüchtigen Speichers 13 auch die Daten 20 des Geräts der Unterhaltungselektronik 1 sowie des Codes für die Freischaltung 21 gespeichert.

Die Daten 20 des Geräts der Unterhaltungselektronik 1 umfassen insbesondere eine eindeutige Kennzahl, z. B. eine Seriennummer des Geräts der Unterhaltungselektronik 1 und/oder eine Seriennummer eines Hardwarebestandteils der Einrichtung 10. Ebenso kann eine eindeutige Kennzahl bei der Herstellung erzeugt und im nichtflüchtigen Speicher 13 gespeichert werden, bevorzugt in dessen besonderen Bereich.

Der Code für die Freischaltung 21 enthält in verschlüsselter Form die Seriennummer bzw. Kennzahl des Geräts der Unterhaltungselektronik 1, für welches er gültig ist, sowie die Gerätefunktionen F₁ bis Fₙ die für den Betrieb freigegeben werden sollen. Der Algorithmus 22 entschlüsselt den Code für die Freischaltung 21 und vergleicht die darin enthaltene Seriennummer bzw. Kennzahl mit der in den Daten 20 des Geräts der Unterhaltungselektronik 1 vorhandenen Seriennummer bzw. Kennzahl. Liegt keine Übereinstimmung vor, kann das Gerät der Unterhaltungselektronik 1 gesperrt werden oder nur mit beschränkter Funktionalität zur Verfügung stehen. Bei Übereinstimmung werden die im Code für die Freischaltung 21 vorgesehenen Gerätefunktionen F₁ bis Fₙ freigegeben.

Dazu wird eine Matrix 23 erzeugt, in der die jeweilige Gerätefunktion F₁ bis Fₙ mittels einer Markierung S₁ bis Sₙ gekennzeichnet ist, ob sie für den Betrieb freigegeben ist oder nicht. Soll während des Betriebs beispielsweise die elektronische Programmzeitschrift dargestellt werden, überprüft die Steuereinrichtung 12 ob die Markierung S₁ der Gerätefunktion F₁ als freigegeben gekennzeichnet ist. Liegt die entsprechende Kennzeichnung vor, wird die elektronische Programmzeitschrift, wie oben beschrieben, erzeugt und dargestellt. Ist die Markierung einer Gerätefunktion nicht als freigegeben, gekennzeichnet, unterbleibt die Ausführung der entsprechenden Gerätefunktion.

Die Matrix 23 kann prinzipiell einmalig bestimmt und im nichtflüchtigen Speicher 13 gespeichert werden. Es ist jedoch vorteilhaft, die Matrix 23 mittels des Algorithmus 22 jedesmal zu bestimmen, wenn das Gerät der Unterhaltungselektronik 1 in Betrieb genommen wird. In diesem Fall wird die Matrix 23 nur während des Betriebs im flüchtigen Speicher 14 gespeichert, wodurch eine Manipulation erschwert wird.

Für den Betrieb kann es vorgesehen sein, daß anhand der Matrix 23 bestimmt wird, welche Gerätefunktionen F₁ bis Fₙ freigegeben sind, so daß bei der Inbetriebnahme nur die Teile der Software aus dem nichtflüchtigen Speicher 13 in den flüchtigen Speicher 14 geladen werden, die freigegeben sind. Ebenso kann es vorgesehen sein, daß bestimmte Grundfunktionen generell immer zur Verfügung stehen und unabhängig von jeder Freigabe bzw. Kennzeichung S₁ bis Sₙ in der Matrix 23 bei der Inbetriebnahme geladen werden.

Soll die Anzahl der zur Verfügung stehenden Gerätefunktionen F₁ bis Fₙ zu einem späteren Zeitpunkt erweitert werden, kann der Benutzer des Geräts der Unterhaltungselektronik 1 einen neuen Code für die Freischaltung 21 gegen eine Gebühr erwerben. Dazu kann er beispielsweise in einem speziellen Bedienmodus, den er über die Bedieneinrichtung 15 aktivieren kann, den bisherigen Code für die Freischaltung 21 auf der Anzeige des Geräts der Unterhaltungselektronik 1 anzeigen lassen. Diesen bisherigen Code für die Freischaltung 21 übermittelt er dem Hersteller, oder einer entsprechend autorisierten Organisation, zusammen mit einer Angabe über die zusätzlich gewünschten Gerätefunktionen F₁ bis Fₙ. Gegen Zahlung einer bestimmten Gebühr, die sich nach der Art und Anzahl der zusätzlich gewünschten Gerätefunktionen F₁ bis Fₙ bestimmt, wird dem Benutzer des Geräts der Unterhaltungselektronik 1 ein entsprechender neuer Code für die Freischaltung 21 übermittelt, welchen dieser z. B. mittels der Bedieneirichtung 15 eingibt. Anschließend, d. h. nachdem der Algorithmus 22 die freigegebenen Gerätefunktionen F₁ bis Fₙ bestimmt hat, stehen die neuen Gerätefunktionen zusammen mit den bisherigen Gerätefunktionen zur Verfügung. Ebenso ist es möglich, daß für die Freigabe zusätzlicher Gerätefunktionen ein zusätzlicher Code für die Freischaltung erzeugt und im nichtflüchtigen Speicher 13 gespeichert wird, der nur die Freigabe der zusätzlichen Gerätefunktionen bewirkt. Der zusätzliche Code für die Freigabe wird dann immer zusammen mit dem Code für die Freigabe 21 - wie oben beschrieben - bei der Inbetriebnahme des Geräts der Unterhaltungselektronik 1 für die Freigabe der Gerätefunktionen verwendet. Es kann aber auch vorgesehen sein, daß von dem Algorithmus 22 ein neuer Code für die Freigabe 21 gebildet wird, der die Freigaben aus dem ursprünglichen Code für die Freigabe 21 sowie dem zusätzlichen Code für die Freigabe enthält. Dieser neue Code für die Freigabe wird dann im nichtflüchtigen Speicher 13 für die weitere Verwendung gespeichert.

Über eine mit der Steuereinrichtung 12 verbundene Schittstelle 11, z. B. ein Modem, kann der oben beschriebene Austausch von bisherigem und neuem Code für die Freischaltung 21 auch über ein Netzwerk abgewickelt werden, z. B. ein Telefonnetz, das Internet usw.

Für den Fall, daß die Bedieneinrichtung 15 als Fernbedienungsgeber mit zugehörigem, an der Steuereinrichtung 12 angeschlossenem Fernbedienungsempfänger, die mittels infrarotem Licht miteinander verbunden sind, ausgestattet ist, kann es auch vorgesehen sein, daß der Fernbedienungsempfänger als Infrarotschnittstelle betrieben werden kann. Dann ist es z. B. mittels eines Mobiltelefons mit Infrarotschnittstelle möglich, den oben beschriebenen Austausch von bisherigem und neuem Code für die Freischaltung 21 vorzunehmen.

Über die Schnittstelle 11 kann auch die Abrechnung der Gebühr erfolgen, z. B. kann eine Kreditkartennummer angegeben werden, über welche die anfallenden Gebühren abgerechnet werden. Ebenso kann die Abrechnung über das Konto des Telefon- oder Mobiltelefonanschlusses abgerechnet werden, welcher verwendet wird.

Steht eine Schnittstelle 11 oder eine, wie oben beschriebene Bedieneinrichtung 15 zur Verfügung, ist es zudem möglich, daß Software in das Gerät der Unterhaltungselektronik 1 bzw. dessen nichtflüchtigen Speicher 13 übertragen und gespeichert wird. Dies ermöglicht es, die für die Erweiterung der Gerätefunktionen benötigte Software zu einem späteren Zeitpunkt zur Verfügung zu stellen, d. h. dem Zeitpunkt der Erweiterung der Freigaben.

Die Schnittstelle 11, oder die modifizierte Bedieneinrichtung 15, erlaubt es auch, die im nichtflüchtigen Speicher 13 gespeicherte Software oder Teile davon zu einem späteren Zeitpunkt auszutauschen, z. B. nachdem sich herausgestellt hat, daß die Software oder Teile davon fehlerhaft sind oder wenn verbesserte Versionen der Software vorliegen.

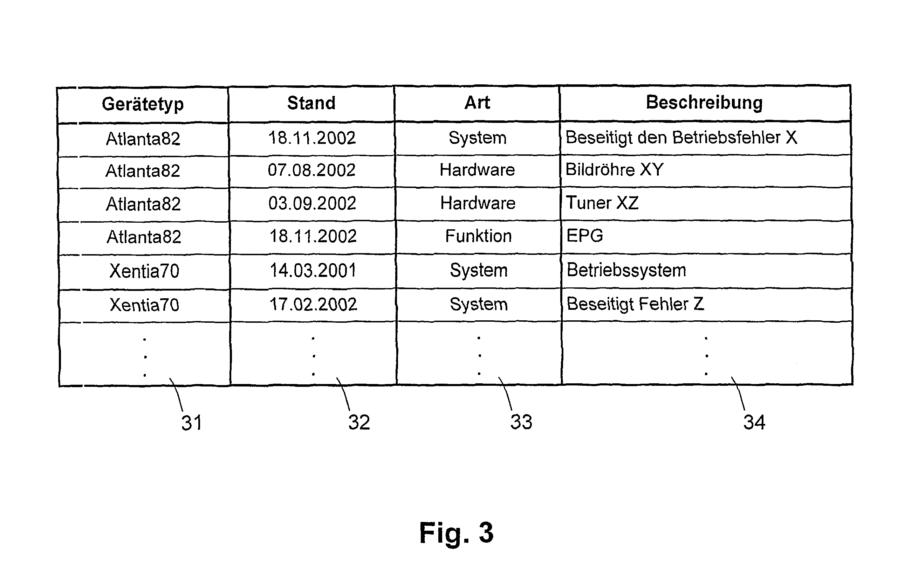

Der Austausch und/oder die Ergänzung von Software oder von Teilen davon kann prinzipiell durch den Benutzer des Geräts der Unterhaltungselektronik 1 erfolgen, z. B. in der oben beschriebenen Weise mittels der Schittstelle 11, die z. B. über das Internet eine Verbindung zum Hersteller des Geräts der Unterhaltungselektronik 1 herstellt. Über ein entsprechendes Menü ist es dann möglich, eine wie in Figur 3 dargestellte Auflistung der zur Verfügung stehenden Software auf der Anzeige des Geräts der Unterhaltungselektronik 1 darzustellen und eine entsprechende Auswahl vorzunehmen. Dies kann beispielsweise über eine Cursor-Steuerung erfolgen, wobei ein Cursor in der Auflistung auf die gewünschte Software positioniert und ausgewählt wird. Die ausgewählte Software wird dann unter Steuerung der Steuereinheit 12 über die Schnittstelle 11 in den nichtflüchtige Speicher 13 geladen. Ist die Software vollständig und fehlerfrei geladen, kann gleichartige, ältere Software durch die Steuereinrichtung 12 gelöscht werden.

Um die Auswahl der benötigten Software zu unterstützen, kann, wie in Figur 3 dargestellt, die Auflistung der verfügbaren Software besondere Informationen enthalten. Die Informationen können Angaben über Gerätetyp 31, für den die Software geeignet ist, Aktualität oder Stand 32, d. h. welche Version die Software aufweist, Art 33 der Software, d. h. ob es sich bei der Software um ein Betriebssystem, um Treiber für bestimmte Hardwarebestandteile oder um zusätzliche Gerätefunktionen handelt, um die das Gerät der Unterhaltungselektronik 1 erweitert werden kann, enthalten. Zusätzlich kann eine Beschreibung 34 in der Auflistung enthalten sein, die genauere Angaben über die Funktion der Software enthält. Beispielsweise kann die Beschreibung 34 Angaben darüber enthalten, daß bestimmte Fehler, die in früheren Softwareversionen aufgetreten sind, beseitigt werden. Ebenso können Angaben in der Beschreibung 34 enthalten sein, welche die Hardwarebestandteile genau bezeichnen, für welche die Software geeignet ist. Weiterhin können Angaben in der Beschreibung 34 gemacht werden, welche speziellen Gerätefunktionen die Software realisiert usw.

Da das fehlerfreie Laden bzw. der fehlerfreie Austausch von Software für die Funktionsfähigkeit des Geräts der Unterhaltungselektronik 1 von entscheidender Bedeutung ist, und da dies nicht ohne gewisse Fachkenntnisse möglich ist, wird es bevorzugt, daß nicht der Benutzer des Geräts der Unterhaltungselektronik 1 das oben beschriebenen Laden bzw. Austauschen von Software vornimmt, sondern daß dies vom Hersteller oder von entsprechend ausgebildetem Servicepersonal vorgenommen wird. Dabei kann die oben für den Benutzer beschriebene Vorgehensweise angewendet werden. Es kann aber auch vorgesehen sein, daß das Servicepersonal über zusätzliche Hilfsmittel verfügt, z. B. einen mobilen Computer (Laptop). In dem mobilen Computer können die im Zusammenhang mit Figur 3 beschriebenen, verfügbaren Softwarebestandteile gespeichert sein oder bei Bedarf, in der oben beschriebenen Weise, z. B. über eine Internetverbindung, geladen oder aktualisiert werden. Der mobile Computer kann über die Schnittstelle 11, die in diesem Fall z. B. als serielle Schnittstelle (RS232) ausgebildet sein kann, an das Gerät der Unterhaltungselektronik 1 angeschlossen werden, um die benötigte Software für die Speicherung im nichtflüchtigen Speicher 13 zu übertragen. Ebenso können die oben beschriebenen Codes für die Freischaltung 21 in das Gerät der Unterhaltungselektronik 1 übertragen werden.

Führt der Hersteller oder das Servicepersonal das Laden oder Austauschen von Software und/oder die Eingabe des Codes für die Freischaltung 21 durch, erfolgt die Abrechnung der fälligen Gebühren direkt mit dem Benutzer des Geräts der Unterhaltungselektronik 1.

Soll jedoch während einer Garantiezeit ein Austausch fehlerhafter Software erfolgen, die für den Benutzer kostenfrei ist, erfolgt eine Abrechnung der Gebühren zwischen dem Servicepersonal und Hersteller.

Um Mißbrauch bei der Abrechnung der Gebühren während der Garantiezeit zu verhindern, können der oben im Zusammenhang mit Figur 2 beschriebene kryptografische Algorithmus 22 sowie die Daten 20 des Geräts der Unterhaltungselektronik 1, insbesondere die eindeutige Kennzahl, z. B. die Seriennummer des Geräts der Unterhaltungselektronik 1, verwendet werden. In der oben beschriebenen Weise erzeugt der Algorithmus 22 aus der Seriennummer eine Zeichenfolge, die das jeweilige Gerät der Unterhaltungselektronik 1 eindeutig identifiziert. Zusätzlich kann der Algorithmus 22 weitere Daten des Geräts der Unterhaltungselektronik 1 einbeziehen. Beispielsweise eine Information über die Version bzw. den Stand der Software vor dem Service und eine Information über die geladene und/oder ausgetauschte Software sowie deren Version bzw. Stand. Als weitere, wesentliche Information kann eine Angabe über das Alter des Geräts der Unterhaltungselektronik 1 enthalten sein. Ein erster Anhaltspunkt für das Alter ergibt sich bereits aus der Seriennummer, jedoch liegt zwischen der Produktion und dem Verkauf des Geräts der Unterhaltungselektronik 1 in der Regel ein bestimmter, nicht ohne weiteres abschätzbarer Zeitraum. Deshalb ist es vorgesehen, daß das aktuelle Datum bei der ersten Inbetriebnahme des Geräts der Unterhaltungselektronik 1 ermittelt und im nichtflüchtigen Speicher 13 gespeichert wird, beispielsweise in dem oben beschriebenen, nicht ohne besondere Berechtigung zugänglichen Bereich oder in verschlüsselter Form. Bei Geräten der Unterhaltungselektronik kann das aktuelle Datum beispielsweise aus Videotext- oder RDS-Daten ermittelt werden. Mittels des Datums der ersten Inbetriebnahme kann dann eine Überprüfung erfolgen, ob der Service noch innerhalb der Garantiezeit erfolgte. Da Geräte der Unterhaltungselektronik 1 häufig vom Verkäufer vor dem Verkauf getestet oder zu Ausstellungszwecken eine gewisse Zeit in den Geschäftsräumen betrieben werden, kann es zusätzlich vorgesehen sein, daß bei der ersten Inbetriebnahme ein Betriebsstundenzähler gestartet wird. Das für die Inbetriebnahme gültige Datum, und damit der Zeitpunkt des Starts der Garantiezeit, wird dann erst ermittelt und gespeichert, nachdem der Betriebsstundenzähler einen bestimmten Schwellenwert, z. B. 100 h, überschritten hat. Für den Hersteller ist es somit möglich zu überprüfen, ob abgerechnete Garanieleistungen berechtigt sind.

Es ist offensichtlich, daß der geschilderte Aufbau des Geräts der Unterhaltungselektronik 1 bzw. das Verfahren zu dessen Betrieb in vielfältiger Weise abgewandelt werden können. Beispielsweise kann auf einen separaten flüchtigen Speicher 14 verzichtet werden, wenn ein geeigneter nichtflüchtiger Speicher 13 verwendet wird, z. B. ein Flash-Speicher.

Ebenso kann der Aufbau des Geräts der Unterhaltungselektronik 1, der in Figur 1 exemplarisch dargestellt ist, abweichen, z. B. können die Bestandteile über einen Bus miteinander verbunden sein, z. B. I²C-Bus (Inter Integrated Circuit-Bus)

Das Gerät der Unterhaltungselektronik 1 kann, neben dem erwähnten Fernsehgerät, auch von einem Empfangsgerät für Rundfunk- oder Fernsehsignale jeder Art, einem optischen oder magnetischen Aufzeichnungs- und Wiedergabegerät für Audio- und/oder Videosignale usw. gebildet werden.

Ebenso ist es offensichtlich, daß die oben beschriebene Reihenfolge des Ladens, Speicherns und/oder Änderns von Software bzw. dem Code für die Freischaltung anders gestaltet oder ausgeführt werden kann. Dabei können auch zusätzliche Gerätefunktionen oder Softwarebestandteile verwendet werden, die nicht ausdrücklich erwähnt erwähnt sind.

Um zu verhindern, daß der Code für die Freischaltung gebrochen wird, kann ein Zähler vorgesehen werden, dessen jeweiliger Stand im besonderen Bereich des nichtflüchtigen Speichers 13 gespeichert wird. Bei versuchten unberechtigten Zugriffen, z. B. der Eingabe eines falschen Codes für die Freischaltung, wird der Stand des Zählers erhöht. Wird ein vorgegebener Wert überschritten, können alle oder bestimmte Gerätefunktion gesperrt werden. Diese Sperre kann nach einer bestimmten Zeit automatisch aufgehoben werden. Es kann aber auch vorgesehen sein, daß die Sperre nur vom Hersteller bzw. von berechtigtem Servicepersonal aufgehoben werden kann.

## Patentansprüche

1. Gerät der Unterhaltungselektronik (1); mit einer das Gerät der Unterhaltungselektronik-(1) bildenden Einrichtung (10), die von einer Steuereinrichtung (12) gesteuert wird, wobei die Steuereinrichtung (12) mit einem Speicher (13, 14) mit einem nichtflüchtigen Teil (13) verbunden ist, in welchem Software für die Steuerung der Einrichtung (10) und die Ausführung von Gerätefunktionen gespeichert ist,
in dem nichtflüchtigen Teil (13) des Speichers (13, 14) ein Code für die Freischaltung (21) der Software oder von Teilen der Software gespeichert ist,
in dem nichtflüchtigen Teil (13) des Speichers (13, 14) eine Kennzahl (20) gespeichert ist, die das Gerät der Unterhaltungselektronik (1) eindeutig kennzeichnet,
in dem nichtflüchtigen Teil (13) des Speichers (13, 14) ein kryptografischer Algorithmus (22) gespeichert ist, der den Code für die Freischaltung (21) und die Kennzahl (20) überprüft, und
die Steuereinrichtung (12) den Algorithmus (22) ausführt und dabei ermittelt, welche Teile der Software für den Betrieb freigegeben sind, und die für den Betrieb freigegebenen Funktionen im Speicher (13, 14) kennzeichnet (23),
**dadurch gekennzeichnet dass**
die Steuereinrichtung (12) bei der ersten Inbetriebnahme des Geräts der Unterhaltungselektronik (1) ein aktuelles Datum ermittelt und im Speicher (13, 14) speichert.

2. Gerät der Unterhaltungselektronik nach Anspruch 1,
**dadurch gekennzeichnet, dass**
die Steuereinrichtung (12) den Algorithmus (22) bei jeder Inbetriebnahme des Geräts der Unterhaltungselektronik (1) ausführt.

3. Gerät der Unterhaltungselektronik nach Anspruch 1 oder 2,
**dadurch gekennzeichnet, dass**
die Steuereinrichtung (12) vor jeder Ausführung eines Teils der Software bzw. einer Gerätefunktion deren Freigabe im Speicher (13, 14) überprüft.

4. Gerät der Unterhaltungselektronik nach Anspruch 3,
**dadurch gekennzeichnet, dass**
bestimmte Teile der Software bzw. bestimmte Gerätefunktionen ohne eine Überprüfung durch die Steuereinrichtung (12) ausgeführt werden.

5. Gerät der Unterhaltungselektronik nach einem der Ansprüche 1 bis 4,
**dadurch gekennzeichnet, dass**
das Gerät der Unterhaltungselektronik (1) über eine Bedieneinrichtung (15) verfügt, für die Eingabe eines Codes für die Freischaltung (21), um die Freigabe von Teilen der Software zu verändern.

6. Gerät der Unterhaltungselektronik nach einem der Ansprüche 1 bis 5,
**dadurch gekennzeichnet, dass**
das Gerät der Unterhaltungselektronik (1) über eine Schnittstelle (11; 15) verfügt, für das Laden eines Codes für die Freischaltung (21), um die Freigabe von Teilen der Software zu verändern.

7. Gerät der Unterhaltungselektronik nach einem der Ansprüche 1 bis 6,
**dadurch gekennzeichnet, dass**
das Gerät der Unterhaltungselektronik (1) über eine Schnittstelle (11; 15) verfügt, über die Software geladen und im Speicher (13, 14) gespeichert wird.

8. Gerät der Unterhaltungselektronik nach einem der Ansprüche 1 bis 7,
**dadurch gekennzeichnet, dass**
die Steuereinrichtung (12) bei der ersten Inbetriebnahme des Geräts der
Unterhaltungselektronik (1) einen Zähler für die Zählung der Betriebsstunden des Geräts der Unterhaltungselektronik (1) startet und ein aktuelle Datum ermittelt und im Speicher (13, 14) speichert, nachdem eine vorgegebene Anzahl von Betriebsstunden vom Zähler gezählt wurde.

9. Gerät der Unterhaltungselektronik nach einem der Ansprüche 1 bis 8,
**dadurch gekennzeichnet, dass**
die Kennzahl (20) eine Seriennummer des Geräts der Unterhaltungselektronik (1) und/oder der Einrichtung (10) ist.

10. Gerät der Unterhaltungselektronik nach einem der Ansprüche 1 bis 9,
**dadurch gekennzeichnet, dass**
das Gerät der Unterhaltungselektronik (1) ein Gerät für den Empfang und/oder die Wiedergabe und/oder die Aufzeichnung von audiovisuellen Signalen ist.

11. Verfahren für den Betrieb eines Geräts der Unterhaltungselektronik (1), mittels Software für die Steuerung des Geräts der Unterhaltungselektronik (1) und die Ausführung von Gerätefunktionen,
ein kryptografischer Algorithmus (22) ausgeführt wird, welcher eine Kennzahl (20), die das Gerät der Unterhaltungselektronik (1) eindeutig kennzeichnet, mit einem Code für die Freischaltung (21) der Software oder von Teilen der Software überprüft, und der Algorithmus (22) bei erfolgreicher Überprüfung den Betrieb der Teile der Software freigibt, deren Freigabe im Code für die Freischaltung (21) enthalten ist,
**dadurch gekennzeichnet, dass**
bei der ersten Inbetriebnahme des Geräts der Unterhaltungselektronik (1) ein aktuelles Datum ermittelt und gespeichert wird.

12. Verfahren nach Anspruch 11,
**dadurch gekennzeichnet, dass**
der Algorithmus (22) bei jeder Inbetriebnahme des Geräts der Unterhaltungselektronik (1) ausführt wird.

13. Verfahren nach Anspruch 11 oder 12,
**dadurch gekennzeichnet, dass**
vor jeder Ausführung eines Teils der Software bzw. einer Gerätefunktion deren Freigabe überprüft wird.

14. Verfahren nach Anspruch 13,
**dadurch gekennzeichnet, dass**
bestimmte Teile der Software bzw. bestimmte Gerätefunktionen ohne eine Überprüfung ausgeführt werden.

15. Verfahren nach einem der Ansprüche 11 bis 14,
**dadurch gekennzeichnet, dass**
weitere Software oder weitere Teile von Software geladen werden.

16. Verfahren nach einem der Ansprüche 11 bis 15,
**dadurch gekennzeichnet, dass**
ab der ersten Inbetriebnahme des Geräts der Unterhaltungselektronik (1) die Betriebsstunden des Geräts der Unterhaltungselektronik (1) gezählt werden, und ein aktuelles Datum ermittelt und gespeichert wird, nachdem eine vorgegebene Anzahl von Betriebsstunden gezählt wurde.

17. Verfahren nach Anspruch 11 oder 16,
**dadurch gekennzeichnet, dass**
mittels des Algorithmus (22) eine Zeichenfolge aus der Kennzahl (20) und dem Datum der ersten Inbetriebnahme erzeugt wird.

18. Verfahren nach Anspruch 17,
**dadurch gekennzeichnet, dass**
der Algorithmus (22) bei der Erzeugung der Zeichenfolge zusätzlich Informationen zur Software oder zu Teilen der Software berücksichtigt.

19. Verfahren nach einem der Ansprüche 11 bis 18,
**dadurch gekennzeichnet, dass**
die Kennzahl (20) eine Seriennummer des Geräts der Unterhaltungselektronik (1) ist.

## Claims

1. Consumer electronics apparatus (1), with a device (10) forming the consumer electronics apparatus (1), which device is controlled by a control device (12), the control device (12) being connected to a memory (13, 14) with a nonvolatile part (13), in which software for control of the device (10) and the execution of apparatus functions is stored, in the nonvolatile part (13) of the memory (13, 14) a code for the release (21) of the software or of parts of the software is stored, in the non-volatile part (13) of the memory (13, 14) a characteristic number (20) is stored that unambiguously identifies the consumer electronics apparatus (1), in the nonvolatile part (13) of the memory (13, 14) a cryptographic algorithm (22) is stored, which verifies the code for the release (21) and the characteristic number (20), and the control device (12) executes the algorithm (22) and in doing so determines which parts of the software are approved for operation, and identifies the functions approved for operation in the memory (13, 14), **characterized in that** the control device (12) on first start-up of the consumer electronics apparatus (1) determines a current date and stores it in the memory (13, 14).

2. Consumer electronics apparatus according to claim 1, **characterized in that** the control device (12) executes the algorithm (22) on each start-up of the consumer electronics apparatus (1).

3. Consumer electronics apparatus according to claim 1 or 2, **characterized in that** the control device (12), prior to any execution of a part of the software or an apparatus function, verifies its approval in the memory (13, 14).

4. Consumer electronics apparatus according to claim 3, **characterized in that** certain parts of the software and certain apparatus functions are executed without verification by the control device (12).

5. Consumer electronics apparatus according to any one of claims 1 to 4, **characterized in that** the consumer electronics apparatus (1) has an operating device (15) for entering a code for the release (21), in order to change the approval of parts of the software.

6. Consumer electronics apparatus according to any one of claims 1 to 5, **characterized in that** the consumer electronics apparatus (1) has an interface (11; 15) for loading a code for the release (21), in order to change the approval of parts of the software.

7. Consumer electronics apparatus according to any one of claims 1 to 6, **characterized in that** the consumer electronics apparatus (1) has an interface (11; 15) via which the software is loaded and stored in the memory (13, 14).

8. Consumer electronics apparatus according to any one of claims 1 to 7, **characterized in that** the control device (12) on first start-up of the consumer electronics apparatus (1) starts a meter for counting the operating hours of the consumer electronics apparatus (1) and ascertains a current date and stores it in the memory (13, 14) after a predetermined number of operating hours have been counted by the meter.

9. Consumer electronics apparatus according to any one of claims 1 to 8, **characterized in that** the characteristic number (20) is a serial number of the consumer electronics apparatus (1) and/or the device (10).

10. Consumer electronics apparatus according to any one of claims 1 to 9, **characterized in that** the consumer electronics apparatus (1) is an apparatus for the receipt and/or the reproduction and/or the recording of audiovisual signals.

11. Method for the operation of a consumer electronics apparatus (1), by means of software for the control of the consumer electronics apparatus (1) and the execution of apparatus functions, a cryptographic algorithm (22) is executed, which verifies a characteristic number (20), which identifies the consumer electronics apparatus (1) unambiguously, with a code for the release (21) of the software or of parts of the software, and if the verification is successful the algorithm (22) approves the operation of parts of the software for which the approval is contained in the code for the release (21), **characterized in that** on first start-up of the consumer electronics apparatus (1) a current date is ascertained and stored.

12. Method according to claim 11, **characterized in that** the algorithm (22) is executed each time the consumer electronics apparatus (1) is started up.

13. Method according to claim 11 or 12, **characterized in that** prior to each execution of a part of the software or an apparatus function its approval is verified.

14. Method according to claim 13, **characterized in that** certain parts of the software or certain apparatus functions are executed without verification.

15. Method according to one of claims 11 to 14, **characterized in that** further software or further parts of software are loaded.

16. Method according to one of claims 11 to 15, **characterized in that** after initial start-up of the consumer electronics apparatus (1), the operating hours of the consumer electronics apparatus (1) are counted, and a current date is ascertained and stored after a predetermined number of operating hours has been counted.

17. Method according to claim 11 or 16, **characterized in that** by means of the algorithm (22) a character string is produced from the characteristic number (20) and the date of first start-up.

18. Method according to claim 17, **characterized in that** the algorithm (22) additionally takes account of information on the software or parts of the software when producing the character string.

19. Method according to any one of claims 11 to 18, **characterized in that** the characteristic number (20) is a serial number of the consumer electronics apparatus (1).

## Revendications

1. Appareil électronique de divertissement (1), comportant un dispositif (10) formant l'appareil électronique de divertissement (1), qui est commandé par un dispositif de commande (12), dans lequel le dispositif de commande (12) est relié à une mémoire (13, 14) comportant une partie non volatile (13), dans laquelle un logiciel pour la commande du dispositif (10) et l'exécution des fonctions de l'appareillage est mémorisé,
dans la partie non volatile (13) de la mémoire (13, 14), est mémorisé un code pour la déconnexion (21) du logiciel ou des parties du logiciel,
dans la partie non volatile (13) de la mémoire (13, 14), est mémorisé un code (20), qui identifie clairement l'appareil électronique de divertissement (1),
dans la partie non volatile (13) de la mémoire (13, 14) est mémorisé un algorithme cryptographique (22), qui vérifie le code pour la déconnexion (21) et le code (20), et
le dispositif de mémoire (12) et exécute l'algorithme (22) est en outre détecté, quelle partie du logiciel sont déconnectées pour le fonctionnement, et identifie (23) les fonctions déconnectées pour le fonctionnement dans la mémoire (13, 14),
**caractérisé en ce que** le dispositif de commande (12) détecte une date actuelle lors de la première mise en service de l'appareil électronique de divertissement (1) et la mémorise dans la mémoire (13, 14).

2. Appareil électronique de divertissement selon la revendication 1, **caractérisé en ce que**
le dispositif de commande (12) exécute l'algorithme (22) à chaque mise en service de l'appareil électronique de divertissement (1).

3. Appareil électronique de divertissement selon la revendication 1 ou 2, **caractérisé en ce que**
le dispositif de commande (12) vérifie avant chaque exécution d'une partie du logiciel ou d'une fonction de l'appareil leur libération dans la mémoire (13, 14).

4. Appareil électronique de divertissement selon la revendication 3, **caractérisé en ce que**
des parties déterminées du logiciel ou des fonctions déterminées de l'appareil sont effectuées sans vérification par le dispositif de commande (12).

5. Appareil électronique de divertissement selon l'une des revendications 1 à 4, **caractérisé en ce que**
l'appareil électronique de divertissement (1) dispose d'une télécommande (15), pour la saisie d'un code pour la déconnexion (21), afin de modifier la libération des parties du logiciel.

6. Appareil électronique de divertissement selon l'une des revendications 1 à 5, **caractérisé en ce que**
l'appareil électronique de divertissement (1) dispose d'une interface (11 ; 15), pour charger un code pour la déconnexion (21) afin de modifier la libération des parties du logiciel.

7. Appareil électronique de divertissement selon l'une des revendications 1 à 6, **caractérisé en ce que**
l'appareil électronique de divertissement (1) dispose d'une interface (11 ; 15), par l'intermédiaire de laquelle le logiciel est chargé et mémorisé dans la mémoire (13, 14).

8. Appareil électronique de divertissement selon l'une des revendications 1 à 7, **caractérisé en ce que**
le dispositif de commande (12) démarre un compteur pour compter les heures de fonctionnement de l'appareil électronique de divertissement (1) lors de la première mise en service de l'appareil électronique de divertissement (1) et détecte une date actuelle et la mémorise dans la mémoire (13, 14), après qu'un nombre prédéterminé d'heures de fonctionnement ait été compté par le compteur.

9. Appareil électronique de divertissement selon l'une des revendications 1 à 8, **caractérisé en ce que**
le code (20) est un numéro de série de l'appareil électronique de divertissement (1) et/ou du dispositif (10).

10. Appareil électronique de divertissement selon l'une des revendications 1 à 9, **caractérisé en ce que**
l'appareil électronique de divertissement (1) est un appareil pour la réception et/ou la reproduction et/ou l'enregistrement de signaux audiovisuels.

11. Procédé pour le fonctionnement d'un appareil électronique de divertissement (1), comportant un logiciel pour la commande d'un appareil électronique de divertissement (1) et l'exécution des fonctions de l'appareil, grâce auquel un algorithme cryptographique (22) est effectué, qui vérifie un code (20), qui identifie clairement l'appareil électronique de divertissement (1), grâce à un code pour la déconnexion (21) du logiciel ou des parties du logiciel, et l'algorithme (22) libère, dans le cas d'une vérification réussie, le fonctionnement des parties du logiciel, dont la libération est comprise dans le code pour la déconnexion (21),
**caractérisé en ce que** lors de la première mise en service de l'appareil électronique de divertissement (1), une date actuelle est détectée et mémorisée.

12. Procédé selon la revendication 11, **caractérisé en ce que**
l'algorithme (22) est exécuté à chaque mise en service de l'appareil électronique de divertissement (1).

13. Procédé selon la revendication 11 ou 12,
**caractérisé en ce que**
avant chaque exécution d'une partie du logiciel ou d'une fonction de l'appareil, sa libération est vérifiée.

14. Procédé selon la revendication 13, **caractérisé en ce que**
des parties déterminées du logiciel ou des fonctions déterminées de l'appareil sont exécutées sans vérification.

15. Procédé selon l'une des revendications 11 à 14,
**caractérisé en ce que**
d'autres logiciels ou d'autres parties du logiciel sont chargés.

16. Procédé selon l'une des revendications 11 à 15,
**caractérisé en ce que**
à partir de la première mise en service de l'appareil électronique de divertissement (1), les heures de fonctionnement de l'appareil électronique de divertissement (1) sont comptées, et une date actuelle est détectée et mémorisée, après qu'un nombre prédéterminé d'heures de fonctionnement ait été compté.

17. Procédé selon la revendication 11 ou 16,
**caractérisé en ce que**
grâce à l'algorithme (22), une chaîne de caractères constituée du code (20) et de la date de la première mise en service est générée.

18. Procédé selon la revendication 17, **caractérisé en ce que**
l'algorithme (22) tient compte des informations supplémentaires pour le logiciel ou des parties du logiciel lors de la génération de la chaîne de caractères.

19. Procédé selon l'une des revendications 11 à 18,
**caractérisé en ce que**
le code (20) est d'un numéro de série de l'appareil électronique de divertissement (1).
